# EUROPEAN PATENT APPLICATION

(11) **EP 4 350 814 A1**
(43) Date of publication of application: **10.04.2024**
(21) Application number: 23798327.5
(22) Date of filing: 22.08.2023
(51) Int. Cl.: H01M 4/62

(54) **POSITIVE ELECTRODE ACTIVE MATERIAL AND PREPARATION METHOD THEREFOR, POSITIVE ELECTRODE SHEET, SECONDARY BATTERY, AND ELECTRONIC DEVICE**

(30) Priority: 26.08.2022 CN 202211035114
(71) Applicant: Tianjin B&M Science And Technology Co., Ltd., Tianjin 300384 (CN)
(72) Inventor: CHEN, Dexian, Binhai New Area Tianjin 300384 (CN); WANG, Huimin, Binhai New Area Tianjin 300384 (CN); LI, Qi, Binhai New Area Tianjin 300384 (CN); LV, Fei, Binhai New Area Tianjin 300384 (CN); XU, Ning, Binhai New Area Tianjin 300384 (CN)
(74) Representative: Meroni, Francesca
(86) International application number: PCT/CN2023/114239
(87) International publication number: WO 2024/041531

(57) **Abstract**

The present application provides a cathode active material and a preparation method therefor, a cathode plate, a secondary battery and an electronic apparatus. The cathode active material includes: a fluorine-doped ternary cathode material bulk; and a coating structure coating at least part of a surface of the fluorine-doped ternary cathode material bulk, wherein the coating structure includes an aluminum-rich inner coating layer close to the surface of the fluorine-doped ternary cathode material bulk and a titanium-rich outer coating layer away from the surface of the fluorine-doped ternary cathode material bulk. The cathode active material provided by the present application can improve structural stability and cycle performance of the secondary battery.

## Description

### Cross-reference to Related Applications

The present application claims priority to Chinese Patent Application No. 202211035114.0, entitled "Cathode Active Material and Preparation Method Therefor, Cathode Plate, Secondary Battery and Electronic Apparatus", filed with China National Intellectual Property Administration on August 26, 2022, the entire content of which is incorporated herein by reference.

### Technical Field

The present application relates to the field of electrochemical technology, and particularly to a cathode active material and a preparation method therefor, a cathode plate, a secondary battery and an electronic apparatus.

### Background Art

Secondary batteries typified by lithium ion batteries have advantages of high working voltage, high energy density, good safety, no memory effect, or the like, and have gained great success in the fields of portable electronic apparatuses, electric vehicles, hybrid vehicles, or the like. Currently, for the traditional secondary battery, ternary materials, such as nickel, cobalt, manganese, or the like, are widely applied to cathode materials due to the advantages of high capacity, high energy density, or the like, however, the secondary battery, including the ternary cathode materials, such as nickel, cobalt, manganese, or the like, has poor structural stability during deep charging and discharging, and thus has poor cycle performance.

### Summary

Based on this, the present application provides a cathode active material and a preparation method therefor, a cathode plate, a secondary battery and an electronic apparatus, which are intended to improve structural stability and cycle performance of the secondary battery.

A first aspect of the present application provides a cathode active material, including:
a fluorine-doped ternary cathode material bulk; and
a coating structure coating at least part of a surface of the fluorine-doped ternary cathode material bulk, wherein the coating structure includes an aluminum-rich inner coating layer close to the surface of the fluorine-doped ternary cathode material bulk and a titanium-rich outer coating layer away from the surface of the fluorine-doped ternary cathode material bulk.

According to any embodiment of the first aspect of the present application, the cathode active material satisfies at least one of the following conditions (1) to (2):
(1) the fluorine-doped ternary cathode material bulk includes a transition region, the transition region is distributed on a shallow surface layer of the fluorine-doped ternary cathode material bulk close to the coating structure, and the transition region contains AlF₃; and
(2) the coating structure further includes a transition layer, the transition layer is located between the aluminum-rich inner coating layer and the titanium-rich outer coating layer, and a Li-AI-O-Ti solid solution structure is distributed in the transition layer.

According to any embodiment of the first aspect of the present application, the cathode active material satisfies at least one of the following conditions (1) to (4):
(1) particles of the cathode active material have an average particle size of 3µm to 15µm;
(2) particles of the fluorine-doped ternary cathode material bulk have an average particle size of 3µm to 15µm;
(3) the aluminum-rich inner coating layer has a thickness of 5nm to 100nm; and
(4) the titanium-rich outer coating layer has a thickness of 5nm to 100nm.

According to any embodiment of the first aspect of the present application, the cathode active material satisfies at least one of the following conditions (1) to (3):
(1) a molecular formula of the fluorine-doped ternary cathode material bulk is represented by Li_{w}NiₓCo_{y}Mn_{1-x-y}O_{2-z}F_{z}, where 0.95≤w≤1.05, 0.33≤x<0.95, 0.05<y≤0.77, 0<z<1, and when w=1, the molecular formula of the fluorine-doped ternary cathode material bulk is represented by LiNiₓCo_{y}Mn_{1-x-y}0_{2-z}F_{z};
(2) based on a total mass of the cathode active material, a mass percent content of an aluminum element in the aluminum-rich inner coating layer is 0.002% to 20%; and
(3) based on the total mass of the cathode active material, a mass percent content of a titanium element in the titanium-rich outer coating layer is 0.002% to 20%.

A second aspect of the present application provides a preparation method of a cathode active material, including:
providing a fluorine-containing ternary precursor sol;
mixing the fluorine-containing ternary precursor sol and a lithium salt, and performing a primary sintering to obtain a fluorine-doped ternary cathode material bulk; and
mixing the fluorine-doped ternary cathode material bulk and an MAX-type-compound-containing coating agent, and then carrying out secondary sintering to form a coating structure coating at least part of a surface of the fluorine-doped ternary cathode material bulk, wherein the coating structure includes an aluminum-rich inner coating layer close to the surface of the fluorine-doped ternary cathode material bulk and a titanium-rich outer coating layer away from the surface of the fluorine-doped ternary cathode material bulk.

According to any embodiment of the second aspect of the present application, the mixing the fluorine-containing ternary precursor sol and the lithium salt and performing primary sintering includes:
uniformly mixing the fluorine-containing ternary precursor sol and the lithium salt, and then carrying out ball milling to obtain a pre-doped material; and
carrying out primary sintering on the pre-doped material for 10h to 30h, preferably 15h to 25h at 300°C to 1,000°C, preferably 350°C to 950°C.

According to any embodiment of the second aspect of the present application, the preparation method satisfies at least one of the following conditions (1) to (3):
(1) a molecular formula of the fluorine-doped ternary cathode material bulk is represented by Li_{w}NiₓCo_{y}Mn_{1-x-y}O_{2-z}F_{z}, where 0.95≤w≤1.05, 0.33≤x<0.95, 0.05<y≤0.77, 0<z<1, and when w=1, the molecular formula of the fluorine-doped ternary cathode material bulk is LiNiₓCo_{y}Mn_{1-x-y}O_{2-z}F_{z};
(2) the lithium salt includes one or more of lithium carbonate, lithium hydroxide, lithium nitrate or lithium acetate; and
(3) a molar ratio of a lithium element of the lithium salt to all transition metal elements of the fluorine-doped ternary cathode material bulk is (1.0-1.1):1.

According to any embodiment of the second aspect of the present application, the mixing the fluorine-doped ternary cathode material bulk and an MAX-type-compound-containing coating agent and then carrying out secondary sintering includes:
uniformly mixing the fluorine-doped ternary cathode material bulk and the MAX-type-compound-containing coating agent, and then carrying out ball milling to obtain a pre-coated material; and
carrying out staged sintering on the pre-coated material to form the coating structure coating at least part of the surface of the fluorine-doped ternary cathode material bulk, so as to obtain the cathode active material.

According to any embodiment of the second aspect of the present application, the carrying out staged sintering on the pre-coated material includes:
sintering the pre-coated material for 1h to 10h, preferably 2h to 8h at 5°C to 400°C, preferably 50°C to 350°C to obtain a first sintered material; and
sintering the first sintered material for 5h to 30h, preferably 10h to 25h at 400°C to 700°C, preferably 450°C to 650°C to obtain the cathode active material.

According to any embodiment of the second aspect of the present application, the preparation method satisfies at least one of the following conditions (1) to (3):
(1) a molecular formula of the MAX-type-compound-containing coating agent is TiₘAlCₙ, where 0<m<5, and 0<n<5;
(2) the MAX-type-compound-containing coating agent includes MAX type compound nanoparticles, and an average particle size of the nanoparticles is 10nm to 2,000nm; and
(3) a mass ratio of the fluorine-doped ternary cathode material bulk to the MAX-type-compound-containing coating agent is 1 :(0.0005-0.1).

According to any embodiment of the second aspect of the present application, the providing a fluorine-containing ternary precursor sol includes:
making a ternary precursor and a dispersing agent contact and mixed with a fluoride-salt-containing aqueous solution to obtain a mixed solution; and
performing ball milling on the mixed solution to provide the fluorine-containing ternary precursor sol.

According to any embodiment of the second aspect of the present application, the preparation method satisfies at least one of the following conditions (1) to (3):
(1) a solid content of the fluorine-containing ternary precursor sol is 5% to 50%;
(2) a concentration of the fluoride-salt-containing aqueous solution is 0.05mol/L to 5mol/L; and
(3) a mass ratio of the ternary precursor, the dispersing agent and the fluoride salt is 1 :(0.001-1.0):(0.001-0.1).

According to any embodiment of the second aspect of the present application, the preparation method satisfies at least one of the following conditions (1) to (4):
(1) a molecular formula of the ternary precursor is NiₐCo_{b}Mn_{1-a-b}(OH)₂, where 0.33≤a<0.95, and 0.05<b≤0.77;
(2) the ternary precursor includes microparticles, and an average particle size of the microparticles is 4µm to 20µm;
(3) the dispersing agent includes one or more of hexadecyl trimethyl ammonium chloride, dodecyl trimethyl ammonium chloride, cetylpyridinium chloride and sodium benzenesulfonate; and
(4) the fluoride salt includes one or more of ammonium fluoride, sodium fluoride, magnesium fluoride and aluminum fluoride, and ammonium fluoride is preferred.

A third aspect of the present application provides a cathode plate, including the cathode active material according to the first aspect of the present application or the cathode active material prepared by the preparation method according to the second aspect of the present application.

A fourth aspect of the present application provides a secondary battery, including the cathode plate provided according to the third aspect of the present application.

A fifth aspect of the present application provides an electronic apparatus, including the secondary battery according to the fourth aspect of the present application.

The electronic apparatus according to the present application includes the secondary battery according to the present application, and thus has at least the same advantages as the secondary battery.

The cathode active material according to the present application is doped with the fluorine element, and the doped fluorine element can enter into lattices of the bulk of the cathode active material, such that a lattice distortion caused by migration of an oxygen element in a cycle process is inhibited, thereby improving stability of the crystal structure, reducing crystal boundary cracks and structural collapse caused by deintercalation of active ions (such as lithium ions) in the crystal structure, improving structural stability of the cathode active material, and then improving the cycle performance of the secondary battery.

Furthermore, the coating structure formed by the aluminum-rich inner coating layer and the titanium-rich outer coating layer in the cathode active material is uniform and compact, has high mechanical strength, and can effectively stabilize the electrode/electrolytic solution interface of the cathode of the secondary battery, isolate the reaction pathway of the transition metal element in high oxidation state in the cathode active material and an electrolytic solution, and thus reduce formation of hydrofluoric acid, reduce dissolution of the transition metal element generated due to that the hydrofluoric acid corrodes the surface of the cathode active material, and weaken the distortion of the surface structure of the cathode active material caused by the dissolution of the transition metal element, thereby improving the interface stability of the ternary cathode of the secondary battery, and further improving the cycle performance of the secondary battery.

### Brief Description of Drawings

FIG. 1 shows XRD patterns of cathode active materials in Examples 1 to 2 and Comparative Example 1.
FIG. 2 is an SEM image and an EDS image of the cathode active material in Example 1.

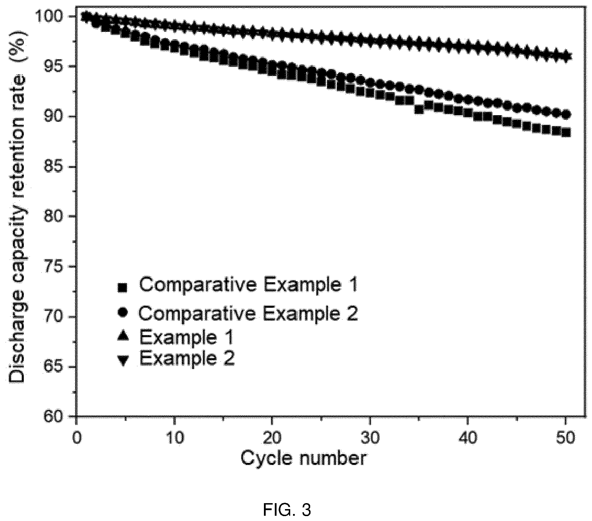

FIG. 3 is a comparison graph of cycle performances of the cathode active materials in Examples 1 to 2 and Comparative examples 1 to 2.

### Detailed Description of Embodiments

To facilitate understanding of the present application, the present application is described more fully hereinafter with reference to the drawings. Preferred examples of the present application are shown in the drawings. However, the present application may be implemented in many different forms and not limited to the examples set forth herein. Inversely, these examples are provided to enable us to get more thorough understanding of the disclosure of the present application.

To be simple, the present application only explicitly discloses some value ranges. However, any lower limit may be combined with any upper limit to form a range not explicitly recited; and any lower limit may be combined with any other lower limit to form a range not explicitly recited, and similarly, any upper limit may be combined with any other upper limit to form a range not explicitly recited. Furthermore, although not explicitly recited, each point or individual numerical value between endpoints of a range is encompassed within the range. Therefore, each point or individual numerical value can serve as its own lower limit or upper limit to be combined with any other point or individual numerical value or with other lower limit or upper limit to form ranges not explicitly recited.

Unless defined otherwise, all technical and scientific terms used herein have the same meanings as those commonly understood by those skilled in the art. The terms used herein in the specification of the present application are for the purpose of describing specific examples but not intended to limit the present application. It should be noted that, unless indicated otherwise, the term "and/or" used herein includes any and all combinations of one or more of the associated listed items, the terms "or more" and "or less" are intended to include the present number, and the term "more" in "one or more" means two or more.

The above summary of the present application is not intended to describe each disclosed embodiment or each implementation of the present application. The following description more particularly exemplifies exemplary embodiments. In various parts throughout this application, guidance is provided through a series of examples, and these examples can be used in various combinations. In each example, the list is provided only as a representative group and should not be explained as exhaustive.

During researches, the inventors find that a secondary battery containing ternary cathode materials, such as nickel, cobalt, manganese, or the like, has the following two main problems during the cycle process: (1) in the cycle process of the secondary battery, due to continuous intercalation and deintercalation of active ions (such as lithium ions), expansion and contraction of lattices are generated in the ternary cathode material, such that crystal boundary cracks and collapse of the crystal structure are prone to be occurring in the ternary cathode materiall, and the cycle performance of the battery is reduced; and (2) an electrode/electrolytic solution interface reaction exists in the cathode of the secondary battery, and particularly in a high-temperature environment, an electrolytic solution is prone to reacting with high-oxidation-state Ni⁴⁺ in the ternary cathode material at an electrode interface to generate hydrofluoric acid, such that the electrode interface is corroded, and a large quantity of transition metal elements are dissolved out, thus further reducing the cycle performance of the secondary battery.

In order to solve the aforementioned technical problem, in a traditional method, solid-phase doping modification of elements is performed on the ternary material, for example, single nano oxide is doped or multiple elements are co-doped, such that stability of a crystal structure of the ternary material can be improved to a certain extent, thereby improving the cycle performance thereof; and inorganic metal oxide, such as aluminum oxide, magnesium oxide, titanium oxide, boron oxide, or the like, is used as a coating agent to perform coating modification on the ternary material, such that the ternary material is prevented from being in direct contact with the electrolytic solution to a certain extent, the dissolution of transition metal ions is reduced, and the cycle performance of the secondary battery is improved.

However, after further researches, the inventors find that most of doped elements are distributed on the shallow surface layer and the surface of the ternary material at a high temperature in a conventional solid phase doping method, and can not enter into an interior of the lattice of the material, and the distribution of the doped elements is not uniform, such that the crystal boundary cracks and the collapse of the crystal structure caused by lithium ion deintercalation in the cycle process can not be effectively inhibited, thus reducing the cycle performance of the secondary battery. Furthermore, when the ternary material is coating-modified by using the conventional inorganic metal oxide, problems are that a coating layer has low strength, is uneven and also exists island-shaped distribution , and then, in electrode manufacturing and rolling and cycle process, cracking and dissolving of the coating layer are prone to be occurring, such that a new exposed interface is formed, causing continuous structure degradation and performance attenuation of the interface, and finally also reducing the cycle performance of the secondary battery. In order to solve the aforementioned technical problems at least to a certain extent, the inventors propose the following technical solution.

A first aspect of embodiments of the present application provides a cathode active material, including: a fluorine-doped ternary cathode material bulk; and a coating structure coating at least part of a surface of the fluorine-doped ternary cathode material bulk, wherein the coating structure includes an aluminum-rich inner coating layer close to the surface of the fluorine-doped ternary cathode material bulk and a titanium-rich outer coating layer away from the surface of the fluorine-doped ternary cathode material bulk.

The cathode active material according to the present application is doped with the fluorine element, and on one hand, the doped fluorine element can enter into lattices of the bulk of the cathode active material to replace some oxygen atoms to form an M-F chemical bond (M is Ni, Co or Mn) with stronger bond energy compared with an M-O chemical bond, such that migration of an oxygen element in a deep charge-discharge cycle process is weakened, and a lattice distortion caused by the migration of the oxygen element is inhibited, thereby improving stability of the crystal structure, reducing crystal boundary cracks and collapse of the crystal structure caused by deintercalation of active ions (such as lithium ions) in the crystal structure, improving structural stability of the cathode active material, and then improving the cycle performance of the secondary battery. On the other hand, part of the doped fluorine element remains on the shallow surface layer of the cathode active material, to form fluoride, such as AlF₃, TiF₃, or the like, in an interface layer of a cathode, and the fluoride can better isolate the electrode/electrolytic solution interface of the secondary battery, thereby facilitating enhancement of interface stability and improvement of the cycle performance thereof.

In some embodiments, the fluorine-doped ternary cathode material bulk includes a transition region, the transition region is distributed on a shallow surface layer of the fluorine-doped ternary cathode material bulk close to the coating structure, and the transition region contains AlF₃.

In the present application, since a radius of fluorine atoms doped into the bulk of the cathode active material is less than that of the oxygen atoms, on one hand, after the fluorine element is doped, the volume of a tetrahedral space of the lattice of the cathode active material is increased, thus increasing interlayer spacing to a certain extent, widening a diffusion channel of the active ions (such as the lithium ions), increasing deintercalation rate of the active ions in the lattice, reducing the crystal boundary cracks and the collapse of the crystal structure caused by retention and even accumulation of the active ions in the deintercalation process, and further improving the structural stability of the cathode active material and the cycle performance of the secondary battery. On the other hand, an Ni-F bond with stronger bond energy formed after the fluorine element is doped can reduce a hybrid arrangement degree of Li⁺/Ni²⁺, such that a layered structure of the cathode active material is more ordered and complete, thereby improving the structural stability thereof, and further improving the cycle performance of the secondary battery. More importantly, a synergistic effect exists between fluorine doping and the coating structure, which is attributed to the fact that F atoms on the shallow surface layer of a crystal can react with aluminum oxide in the aluminum-rich inner coating layer to produce AlF₃ resistant to HF corrosion, thereby further improving the stability of the electrode/electrolytic solution interface, and simultaneously inhibiting structural degradation (formation of a halite phase, an oxygen defect, or the like) of the shallow surface layer in the cycle process to a certain extent, and improving the stability of the crystal structure.

In some embodiments, the coating structure also includes a transition layer, the transition layer is located between the aluminum-rich inner coating layer and the titanium-rich outer coating layer, and a Li-AI-O-Ti solid solution structure is distributed in the transition layer.

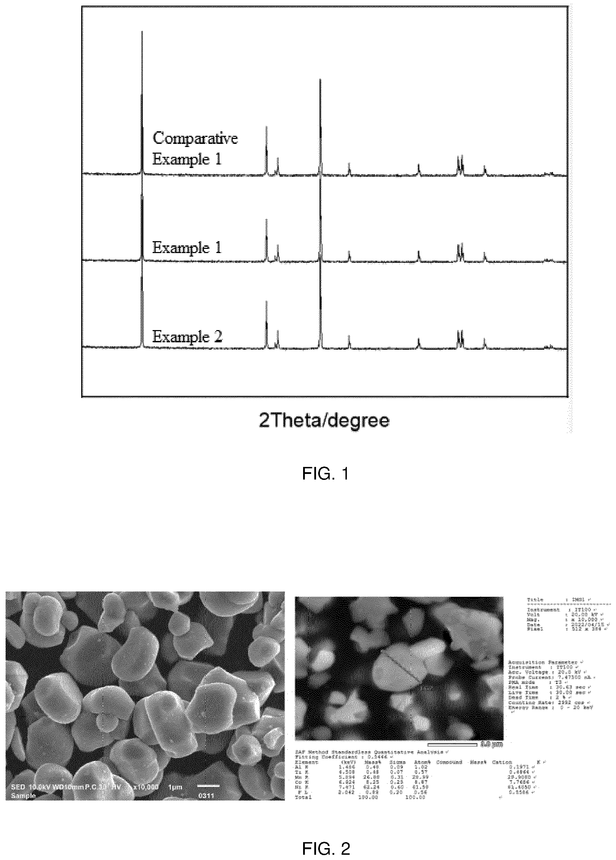

In the present application, the coating structure formed by the aluminum-rich inner coating layer and the titanium-rich outer coating layer in the cathode active material is in high uniformity and compactness, has high mechanical strength, and can effectively stabilize the electrode/electrolytic solution interface of the cathode of the secondary battery, isolate a reaction pathway of a transition metal element in high oxidation state in the cathode active material and an electrolytic solution, and thus reduce formation of hydrofluoric acid, reduce dissolution of the transition metal element generated due to that the hydrofluoric acid corrodes a surface of the cathode active material, and weaken the distortion of a surface structure of the cathode active material caused by the dissolution of the transition metal element, thereby improving interface stability of the ternary cathode of the secondary battery, and improving the cycle performance of the secondary battery. On the other hand, a layer of a solid solution structure (shown in FIGS. 1 to 2) of Li-AI-O-Ti similar to a solid electrolyte exists between the aluminum-rich inner coating layer and the titanium-rich outer coating layer, and compared with a relatively "loose" conventional oxide coating layer structure, a solid solution formed by Al and Ti elements is more compact, has higher lithium ion and electron conductivity that can better inhibit dissolution of the transition metal on the surface of the material, and improve the rate performance of the material.

In some embodiments, particles of the cathode active material have an average particle size of 3µm to 15µm. The average particle size of the cathode active material is in a proper range, such that the particles are more evenly mixed, and gaps between the particles during mixing are reduced, increasing a compaction density of the cathode, and improving the rate performance of the secondary battery.

In some embodiments, particles of the fluorine-doped ternary cathode material bulk have an average particle size of 3µm to 15µm. The average particle size of the particles of the fluorine-doped ternary cathode material bulk is controlled within the above range, which is conductive to improving uniformity of contact and mixing with a MAX-type-compound-containing coating agent, improving coating uniformity of the MAX-type-compound-containing coating agent thereon, and further improving uniformity and compactness of the coating structure.

In some embodiments, the aluminum-rich inner coating layer has a thickness of 5nm to 100nm. For example, the thickness of the aluminum-rich inner coating layer is 5nm, 10nm, 20nm, 30nm, 40nm, 50nm, 60nm, 70nm, 80nm, 90nm, 100nm or in a range between any values above.

In some embodiments, the titanium-rich outer coating layer has a thickness of 5nm to 100nm. For example, the thickness of the titanium-rich outer coating layer is 5nm, 10nm, 20nm, 30nm, 40nm, 50nm, 60nm, 70nm, 80nm, 90nm, 100nm or in a range between any values above.

In the embodiment of the present application, when the thicknesses of the aluminum-rich inner coating layer and the titanium-rich outer coating layer are less than 5nm, a coating effect is poor and the coating layer is incomplete/insufficient; and when the thicknesses of the coating layers are more than 100nm, the capacity and the cycle performance of the secondary battery are reduced, and thus, the thicknesses of the coating layers are required to be controlled within the above ranges.

In some embodiments, a molecular formula of the fluorine-doped ternary cathode material bulk is Li_{w}NiₓCo_{y}Mn_{1-x-y}O_{2-z}F_{z}, where 0.95≤w≤1.05, 0.33≤x<0.95, 0.05<y≤0.77, 0<z<1, and when w=1, the molecular formula of the fluorine-doped ternary cathode material bulk is LiNiₓCo_{y}Mn_{1-x-y}O_{2-z}F_{z}.

In some embodiments, based on a total mass of the cathode active material, a mass percent content of an aluminum element in the aluminum-rich inner coating layer is 0.002% to 20%.

In some embodiments, based on the total mass of the cathode active material, a mass percent content of a titanium element in the titanium-rich outer coating layer is 0.002% to 20%.

A second aspect of the embodiments of the present application provides a preparation method of a cathode active material, including the following steps:
S10: providing fluorine-containing ternary precursor sol;
S20: mixing the fluorine-containing ternary precursor sol and a lithium salt, and performing primary sintering to obtain a fluorine-doped ternary cathode material bulk; and
S30: mixing the fluorine-doped ternary cathode material bulk and an MAX-type-compound-containing coating agent, and then carrying out secondary sintering to form a coating structure coating at least part of a surface of the fluorine-doped ternary cathode material bulk, wherein the coating structure includes an aluminum-rich inner coating layer relatively close to the surface of the fluorine-doped ternary cathode material bulk and a titanium-rich outer coating layer relatively far away from the surface of the fluorine-doped ternary cathode material bulk.

In the preparation method of a cathode active material according to the present application, to realize fluorine element doping (wet doping), liquid phase mixing and sintering are performed on the fluorine-containing ternary precursor sol with the lithium salt, the coating contact area between a fluorine element and a ternary precursor can be increased, such that the fluorine element can enter into the lattice of the ternary material more easily during primary sintering, and is orderly doped and distributed in the lattice of the material, an M-F chemical bond (M is Ni, Co or Mn) with strong bond energy is formed in the lattice, the migration of oxygen element in a deep charge-discharge cycle process is weakened, and lattice distortion caused by the migration of the oxygen element is inhibited, thereby improving stability of the crystal structure, reducing crystal boundary cracks and collapse of the crystal structure caused by deintercalation of active ions (such as lithium ions) in the crystal structure, improving structural stability of the cathode active material, and then improving the cycle performance of a secondary battery.

Furthermore, the coating structure formed by the aluminum-rich inner coating layer and the titanium-rich outer coating layer can be formed through secondary sintering, and the coating structure is in high uniformity and compactness, has high mechanical strength, and can effectively stabilize the electrode/electrolytic solution interface of the cathode of the secondary battery, isolate the reaction pathway of the transition metal element in high oxidation state in the cathode active material and an electrolytic solution, and thus reduce formation of hydrofluoric acid, reduce dissolution of the transition metal element generated due to that the hydrofluoric acid corrodes the surface of the cathode active material, and weaken the distortion of the surface structure of the cathode active material caused by the dissolution of the transition metal element, thereby improving interface stability of the ternary cathode of the secondary battery, and improving the cycle performance thereof.

In some embodiments, the step S10 as for providing a fluorine-containing ternary precursor sol includes the following steps:
S100: making a ternary precursor and a dispersing agent contact and mixed with a fluoride-salt-containing aqueous solution to obtain a mixed solution; and
S110: performing ball milling on the mixed solution to provide the fluorine-containing ternary precursor sol.

In some embodiments, a solid content of the fluorine-containing ternary precursor sol is 5% to 50%. For example, the solid content may be 5%, 10%, 15%, 20%, 25%, 30%, 35%, 40%, 45%, 50% or in a range between any values above. The solid content is controlled within a proper range, which is conductive to improving the utilization rate of the fluorine-containing ternary precursor, and meanwhile avoiding more agglomeration and precipitation.

Specifically, if the solid content obtained after the ternary precursor, the dispersing agent and the fluoride-salt-containing aqueous solution are mixed is just within the range of 5% to 50%, there may be no need to evaporate water; and if the obtained mixed solution is dilute or a sol with a target solid content is required to be obtained, the mixed solution may be placed in a rotary evaporator to evaporate a solvent to obtain the sol with the target solid content.

In some embodiments, a molecular formula of the ternary precursor is NiₐCo_{b}Mn_{1-a-b}(OH)₂, where 0.33≤a<0.95, and 0.05<b≤0.77.

In some embodiments, the ternary precursor includes microparticles, and an average particle size of the microparticles is 4µm to 20µm. For example, the average particle size of the microparticles is 4µm, 7µm, 10µm, 13µm, 16µm, 19µm, 20µm or in a range between any values above.

The average particle size of the microparticles contained in the ternary precursor is known in the art and can be measured by an instrument and a method known in the art. For example, it may be conveniently measured, referring to GB/T19077-2016 Particle Size Distribution Laser Diffraction Method, by a laser particle size analyzer, such as Mastersizer 2000E type laser particle size analyzer from Malvern Instruments Ltd. in England.

In some embodiments, a concentration of the fluoride-salt-containing aqueous solution is 0.05mol/L to 5mol/L. For example, the concentration may be 0.05mol/L, 0.1mol/L, 0.5mol/L, 1mol/L, 1.5mol/L, 2mol/L, 2.5mol/L, 3mol/L, 3.5mol/L, 4mol/L, 4.5mol/L, 5mol/L or in a range between any values above. The concentration of the fluoride-salt-containing aqueous solution is controlled in a proper range, which is conductive to obtaining the fluorine-containing ternary precursor with a proper fluorine element concentration, thereby achieving a better fluorine element doping effect in the subsequent primary sintering process.

In some embodiments, the type of the fluoride salt is not particularly defined, and may be selected according to actual requirements. For example, the fluoride salt may include one or more of ammonium fluoride, sodium fluoride, magnesium fluoride and aluminum fluoride, and ammonium fluoride is preferred.

The fluoride salt selected as a dopant in the present application can have the following functions: on one hand, electronegativity of fluorine doped is higher than that of the oxygen atoms, such that the bond energy of metal atoms and anions in the ternary material can be enhanced after doping, facilitating stabilizing the structure; more importantly, after the fluorine atoms are doped, the fluorine atoms doped in the shallow layer may react with the aluminum-rich layer to form AlF₃ with better stability, thus effectively stabilizing a structure of the shallow surface layer, and inhibiting a structural reconstruction phenomenon thereof occurring in the cycle process.

In some embodiments, a mass ratio of the ternary precursor, the dispersing agent and the fluoride salt is 1:(0.001-1.0):(0.001-0.1).

In some embodiments, the type of the dispersing agent is not particularly defined, and may be selected according to actual requirements. For example, the dispersing agent may include one or more of hexadecyl trimethyl ammonium chloride, dodecyl trimethyl ammonium chloride, cetylpyridinium chloride and sodium benzenesulfonate.

In some embodiments, the step S20 of mixing the fluorine-containing ternary precursor sol and a lithium salt and performing primary sintering includes the following steps:
S200: uniformly mixing the fluorine-containing ternary precursor sol and the lithium salt, and then carrying out ball milling to obtain a pre-doped material; and
S210: carrying out primary sintering on the pre-doped material for 10h to 30h, preferably 15h to 25h at 300°C to 1,000°C, preferably 350°C to 950°C, to obtain the fluorine-doped ternary cathode material bulk.

In some embodiments, a molecular formula of the fluorine-doped ternary cathode material bulk is LiNiₓCo_{y}Mn_{1-x-y}O_{2-z}F_{z}, where 0.33≤x<0.95, 0.05<y≤0.77, and 0<z<1.

In some embodiments, a molar ratio of a lithium element of the lithium salt to all transition metal elements in the fluorine-doped ternary cathode material bulk is (1.0-1.1):1.

In some embodiments, the type of the lithium salt is not particularly defined, and may be selected according to actual requirements. For example, the lithium salt may include one or more of lithium carbonate, lithium hydroxide, lithium nitrate and lithium acetate.

In some embodiments, a temperature of the primary sintering is 300°C to 1,000°C. For example, it may be 300°C, 400°C, 500°C, 600°C, 700°C, 800°C, 900°C, 1,000°C, or in a range between any values above. Preferably, the temperature of the primary sintering is 350°C to 950°C.

In some embodiments, a duration of the primary sintering is 10h to 30h. For example, it may be 10h, 15h, 20h, 25h, 30h or in a range between any values above. Preferably, the duration of the primary sintering is 15h to 25h.

In some embodiments, a sintering atmosphere of the primary sintering is not particularly limited, and may be selected according to actual requirements. For example, the sintering atmosphere may be air, oxygen, or a mixed atmosphere of air and oxygen.

In the embodiment of the present application, the temperature and the duration of the primary sintering are controlled within proper ranges, and by the cooperation of the temperature and the duration, on one hand, most of fluorine elements can enter into lattices of the bulk of the cathode active material to replace some oxygen atoms to form an M-F chemical bond (M is Ni, Co or Mn) with stronger bond energy compared with an M-O chemical bond, such that the migration of an oxygen element in a deep charge-discharge cycle process is weakened, and a lattice distortion caused by the migration of the oxygen elements is inhibited, thereby improving stability of the crystal structure, reducing crystal boundary cracks and collapse of the crystal structure caused by deintercalation of active ions (such as lithium ions) in the crystal structure, improving structural stability of the cathode active material, and then improving the cycle performance of the secondary battery. On the other hand, part of the fluorine elements are remained on the shallow surface layer of the cathode active material, fluoride, such as AlF₃, TiF₃, or the like, is formed in an interface layer of a cathode, and the fluoride can better isolate an electrode/electrolytic solution interface of the secondary battery, thereby facilitating enhancement of interface stability and an improvement of the cycle performance thereof.

In some embodiments, the step S30 of mixing the fluorine-doped ternary cathode material bulk and an MAX-type-compound-containing coating agent and then carrying out secondary sintering includes the following steps:
S300: uniformly mixing the fluorine-doped ternary cathode material bulk and the MAX-type-compound-containing coating agent, and then carrying out ball milling to obtain a pre-coated material; and
S310: carrying out staged sintering on the pre-coated material to form the coating structure coating at least part of the surface of the fluorine-doped ternary cathode material bulk, so as to obtain the cathode active material.

In some embodiments, a molecular formula of the MAX-type-compound-containing coating agent is TiₘAlCₙ, where 0<m<5, and 0<n<5. Preferably, the MAX-type-compound-containing coating agent is Ti₃AlC₂.

Selection of an MAX type compound as the coating agent in the present application mainly has the following reasons: (1) M and X in the MAX type compound form a layered structure, A is an interlayer intercalation element, and structural characteristics thereof determine that activities of the elements A and M are different; (2) the MAX type compound is a layered structure that has large structural similarity with the ternary material and has high electronic conductivity which is much higher than that of a conventional oxide coating layer (the electronic conductivity of the conventional oxide coating layer is about 10⁻⁴cm/s), and can both inhibit an interface reaction after coating, and improve an electrochemical activity, such as rate performance, or the like; and (3) the MAX type compound is easy to prepare, consists of common elements, and has a controllable cost to facilitate industrialization.

In some embodiments, the MAX-type-compound-containing coating agent includes MAX type compound nanoparticles, and an average particle size of the nanoparticles is 10nm to 2,000nm. For example, the average particle size of the nanoparticles is 100nm, 400nm, 700nm, 1,000nm, 1,300nm, 1,600nm, 1,900nm or in a range between any values above. The average particle size of the nanoparticles of the MAX type compound is in a proper range, such that uniform coating can be realized, facilitating compactness of the coating layer formed subsequently.

In some embodiments, a mass ratio of the fluorine-doped ternary cathode material bulk to the MAX-type-compound-containing coating agent is 1 :(0.0005-0.1).

It should be noted that in order to form the coating structure composed of the aluminum-rich inner coating layer and the titanium-rich outer coating layer in the cathode active material, the pre-doped material is required to be subjected to staged sintering in steps S3100 and S3110 as follows, and a heating rate during the staged sintering process is required to be controlled.

In some embodiments, the step S310 of carrying out staged sintering on the pre-coated material includes the following steps:
S3100: sintering the pre-doped material for 1h to 10h, preferably 2h to 8h at 5°C to 400°C, preferably 50°C to 350°C to obtain a first sintered material; and
S3110: sintering the first sintered material for 5h to 30h, preferably 10h to 25h at 400°C to 700°C, preferably 450°C to 650°C to obtain the cathode active material.

In some embodiments, in the step S3100, low-temperature-stage sintering is performed first. A temperature of the low-temperature-stage sintering is required to be controlled at 5°C to 400°C, for example, 50°C, 100°C, 150°C, 200°C, 250°C, 300°C, 350°C or in a range between any values above; and a duration is required to be controlled at 1h to 10h, for example, 2h, 4h, 8h or in a range between any values above; and the heating rate is less than or equal to 3°C/min.

During the low-temperature-stage sintering, by controlling the temperature, the duration and the heating rate within proper ranges, that is, through cooperation of the temperature, the duration and the heating rate, the Al elements with a higher activity in the MAX-type-compound-containing coating agent may be migrated to the surface to form Al₂O₃ nanoparticles, and the surface of the ternary material is first coated to form the aluminum-rich inner coating layer, and at this point, the coating layer has an island-shaped structure which is loose.

In some embodiments, in the step S3110, high-temperature-stage sintering is performed. A temperature of the high-temperature-stage sintering is required to be controlled at 400°C to 700°C, for example, 450°C, 500°C, 550°C, 600°C, 650°C or in a range between any values above; a duration is required to be controlled at 5h to 30h, for example, 10h, 15h, 20h, 25h or in a range between any values above; and the heating rate is less than or equal to 5°C/min.

During the high-temperature-stage sintering, by controlling the temperature, the duration and the heating rate within proper ranges, that is, through cooperation of the temperature, the duration and the heating rate, the MAX type compound dopant can be decomposed completely to form TiO₂, and the coating is carried out on the basis of the aluminum-rich inner coating layer to form the titanium-rich outer coating layer, so as to obtain the double-layer coating structure consisting of the aluminum-rich inner coating layer and the titanium-rich outer coating layer. The obtained coating structure forms an Al₂O₃-TiO₂ solid solution, and therefore, the structure is compact and uniform, and has high mechanical strength.

In some embodiments, sintering atmospheres of the low-temperature-stage sintering and the high-temperature-stage sintering are not particularly limited, and may be selected according to actual requirements. For example, the sintering atmosphere may be air, oxygen, or a mixed atmosphere of air and oxygen.

Thus, the coating structure formed of the aluminum-rich inner coating layer and the titanium-rich outer coating layer can be formed through staged sintering, and the coating structure is in high uniformity and compactness, has high mechanical strength, and can effectively stabilize the electrode/electrolytic solution interface of the cathode of the secondary battery, isolate the reaction pathway of the transition metal element in high oxidation state of the cathode active material and the electrolytic solution, and thus reduce the formation of the hydrofluoric acid, reduce dissolution of the transition metal element generated due to that the hydrofluoric acid corrodes the surface of the cathode active material, and weaken the distortion of the surface structure of the cathode active material caused by the dissolution of the transition metal element, thereby improving the interface stability of the ternary cathode of the secondary battery, and improving the cycle performance thereof.

A third aspect of the embodiments of the present application provides a cathode plate, including the cathode active material according to the first aspect of the present application or the cathode active material prepared by the preparation method according to the second aspect of the present application.

In some embodiments, the cathode plate includes a positive current collector and a cathode film layer provided on at least one surface of the positive current collector, the cathode film layer including the cathode active material according to the second aspect of the present application.

As an example, the positive current collector has two opposite surfaces in a thickness direction thereof, and the cathode film layer is provided on any one or both of the two opposite surfaces of the positive current collector.

In some embodiments, a metal foil or a composite current collector may be used as the positive current collector. For example, aluminum foil may be used as the metal foil. The composite current collector may include a polymer material base layer and a metal layer formed on at least one surface of the polymer material base layer. The composite current collector may be formed by forming a metal material (aluminum, aluminum alloy, nickel, nickel alloy, titanium, titanium alloy, silver, silver alloy, or the like) on the polymer material base layer (such as base of polypropylene (PP), polyethylene terephthalate (PET), polybutylene terephthalate (PBT), polystyrene (PS), polyethylene (PE), or the like).

In some embodiments, the cathode film layer further optionally includes a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and fluorine-containing acrylate resin.

In some embodiments, the cathode film layer further optionally includes a conductive agent. As an example, the conductive agent may include at least one of superconducting carbon, acetylene black, carbon black, Ketjen black, carbon dots, carbon nanotubes, graphene, and carbon nanofibers.

In some embodiments, the cathode plate may be fabricated by: dispersing the above components for fabricating the cathode plate, such as the cathode active material, the conductive agent, the binder, and any other component(s), in a solvent (for example, N-methyl pyrrolidone) to form a cathode slurry (cathode slurry); and coating the positive current collector with the cathode slurry, and performing drying, cold pressing and other processes to obtain the cathode plate.

A fourth aspect of the embodiments of the present application provides a secondary battery, including the cathode plate according to the third aspect of the present application.

In some embodiments, the type of the secondary battery is not particularly limited, and the secondary battery may include any battery in which an electrochemical reaction occurs to achieve mutual conversion between chemical energy and electrical energy, and may be, for example, a lithium ion battery or a sodium ion battery.

In some embodiments, the secondary battery further includes an anode plate, an electrolyte and a separator. During charging and discharging processes of the battery, active ions are intercalated and deintercalated back and forth between the cathode plate and the anode plate. The electrolyte plays a role in conducting ions between the cathode plate and the anode plate. The separator is provided between a cathode plate and an anode plate, mainly functions to preventing a short circuit of the cathode and the anode, and meanwhile to allow the ions to pass therethrough.

A fifth aspect of the embodiments of the present application provides an electronic apparatus, including the secondary battery according to the fourth aspect of the present application. In the above, the secondary battery may be used as a power source in the electronic apparatus.

In some embodiments, the type of the electronic apparatus is not particularly limited, and may be any electronic apparatus known in the art. For example, the electronic apparatus may include, but not limited to, a notebook computer, a pen-input computer, a mobile computer, an electronic book player, a portable phone, a portable facsimile, a portable copier, a portable printer, a stereo headset, a video recorder, a liquid crystal television, a portable cleaner, a portable CD player, a mini-disc, a transceiver, an electronic organizer, a calculator, a memory card, a portable recorder, a radio, a backup power source, an electric motor, an automobile, a motorcycle, a power-assisted bicycle, a bicycle, a lighting fixture, a toy, a game console, a timepiece, an electric tool, a flash lamp, a camera, a large-sized household storage battery, a lithium ion capacitor, or the like.

### Example

Specific examples are described below. The present disclosure is described in more detail in the following examples. These examples are intended as illustrative examples only, since various modifications and changes made within the scope of the present disclosure will be apparent to those skilled in the art. Unless otherwise specified, all parts, percentages, and ratios reported in the following examples are on a weight basis, all reagents used in the examples are commercially available or synthesized according to conventional methods and can be used directly without further treatment, and instruments used in the examples are commercially available.

### Example 1

(1) 2.5kg of 4.0µm ternary precursor Ni_{0.6}Co_{0.1}Mn_{0.3}(OH)₂ and 50g of hexadecyl trimethyl ammonium chloride were added into 6L of 0.005mol/L ammonium fluoride aqueous solution, ball milling was performed for 2h to form a sol with a certain solid content, and after uniformly mixing, the solid content was controlled to be 40% to obtain the fluorine-containing ternary precursor sol;
(2) 2.0kg of fluorine-containing ternary precursor sol was mixed with 0.958kg of lithium carbonate, ball milling was performed for 2h, and then, sintering was performed, wherein a molar ratio of a lithium element of the lithium carbonate to transition metal elements of the ternary precursor was Li/(Ni+Co+Mn)=1.053, the sintering temperature was controlled to be 960°C, the sintering duration was 12h, the sintering atmosphere was air, and the fluorine-doped ternary cathode material bulk was obtained after sintering; and
(3) 2.0kg of fluorine-doped ternary cathode material bulk was mixed with 12.5g of 30nm Ti₃AlC₂, ball milling was performed for 2h, and then, staged sintering was performed, wherein for the low-temperature-stage sintering, the temperature was 400°C, the sintering duration was 4h, and the heating rate was 1.5°C/min; and for the high-temperature-stage sintering, the temperature was 650°C, the sintering duration was 8h, the heating rate was 4°C/min, the sintering atmosphere was air, and the fluorine-doped cathode active material coated with the aluminum-rich inner layer and the titanium-rich outer layer was obtained after sintering.

### Example 2

(1) 2.5kg of 4.0µm ternary precursor Ni_{0.6}Co_{0.1}Mn_{0.3}(OH)₂ and 50g of hexadecyl trimethyl ammonium chloride were added into 6L of 0.005mol/L ammonium fluoride aqueous solution, ball milling was performed for 2h to form a sol with a certain solid content, and after uniformly mixing, the solid content was controlled to be 40% to obtain the fluorine-containing ternary precursor sol;
(2) 2.0kg of fluorine-containing ternary precursor sol was mixed with 0.958kg of lithium carbonate, ball milling was performed for 2h, and then, sintering was performed, wherein a molar ratio of a lithium element in the lithium carbonate to transition metal elements in the ternary precursor was Li/(Ni+Co+Mn)=1.053, the sintering temperature was controlled to be 960°C, the sintering duration was 12h, the sintering atmosphere was air, and the fluorine-doped ternary cathode material bulk was obtained after sintering; and
(3) 2.0kg of fluorine-doped ternary cathode material bulk was mixed with 25g of 30nm Ti₃AlC₂, ball milling was performed for 2h, and then, staged sintering was performed, wherein for the low-temperature-stage sintering, the temperature was 400°C, the sintering duration was 4h, and the heating rate was 1.5°C/min; and for the high-temperature-stage sintering, the temperature was 650°C, the sintering duration was 8h, the heating rate was 4°C/min, the sintering atmosphere was air, and the fluorine-doped cathode active material coated with the aluminum-rich inner layer and the titanium-rich outer layer was obtained after sintering.

### Example 3

(1) 2.5kg of 4.0µm ternary precursor Ni_{0.60}Co_{0.1}Mn_{0.28}(OH)₂ and 50g of hexadecyl trimethyl ammonium chloride were added into 6L of 0.005mol/L ammonium fluoride aqueous solution, ball milling was performed for 2h to form sol with a certain solid content, and after uniformly mixing, the solid content was controlled to be 40% to obtain the fluorine-containing ternary precursor sol;
(2) 2.0kg of fluorine-containing ternary precursor sol was mixed with 0.970kg of lithium carbonate, ball milling was performed for 2h, and then, sintering was performed, wherein a molar ratio of a lithium element in the lithium carbonate to transition metal elements in the ternary precursor was Li/(Ni+Co+Mn)=1.060, the sintering temperature was controlled to be 960°C, the sintering duration was 12h, the sintering atmosphere was air, and the fluorine-doped ternary cathode material bulk was obtained after sintering; and
(3) 2.0kg of fluorine-doped ternary cathode material bulk was mixed with 25g of 30nm Ti₃AlC₂, ball milling was performed for 2h, and then, staged sintering was performed, wherein for the low-temperature-stage sintering, the temperature was 400°C, the sintering duration was 4h, and the heating rate was 1.0°C/min; and for the high-temperature-stage sintering, the temperature was 650°C, the sintering duration was 8h, the heating rate was 10°C/min, the sintering atmosphere was air, and the fluorine-doped cathode active material coated with the aluminum-rich inner layer and the titanium-rich outer layer was obtained after sintering.

### Example 4

(1) 2.5kg of 15µm ternary precursor Ni_{0.6}Co_{0.1}Mn_{0.3}(OH)₂ and 50g of hexadecyl trimethyl ammonium chloride were added into 12L of 0.005mol/L ammonium fluoride aqueous solution, ball milling was performed for 2h to form a sol with a certain solid content, and after uniformly mixing, the solid content was controlled to be 20% to obtain the fluorine-containing ternary precursor sol;
(2) 2.0kg of fluorine-containing ternary precursor sol was mixed with 0.998kg of lithium carbonate, ball milling was performed for 2h, and then, sintering was performed, wherein a molar ratio of a lithium element in the lithium carbonate to transition metal elements in the ternary precursor was Li/(Ni+Co+Mn)=1.070, the sintering temperature was 750°C, the sintering duration was 15h, the sintering atmosphere was air, and the fluorine-doped ternary cathode material bulk was obtained after sintering; and
(3) 2.0kg of fluorine-doped ternary cathode material bulk was mixed with 125g of 30nm Ti₃AlC₂, ball milling was performed for 2h, and then, staged sintering was performed, wherein for the low-temperature-stage sintering, the temperature was 350°C, the sintering duration was 3h, and the heating rate was 2.5°C/min; and for the high-temperature-stage sintering, the temperature was 680°C, the sintering duration was 10h, the heating rate was 5°C/min, the sintering atmosphere was air, and the fluorine-doped cathode active material coated with the aluminum-rich inner layer and the titanium-rich outer layer was obtained after sintering.

### Comparative Example 1

The preparation method of Comparative Example 1 was similar to that of Example 1, except that: the cathode active material was not subjected to doping and coating, that is, the ternary precursor Ni_{0.6}Co_{0.1}Mn_{0.3}(OH)₂ and lithium hydroxide were uniformly mixed according to the molar ratio of the lithium element to the transition metal elements of Li/(Ni+Co+Mn)=1.053, and then, the mixture was sintered in an oxygen atmosphere of a box-type furnace, wherein the heating rate was 10°C/min, the sintering temperature was 960°C, the sintering duration was 12h, and the undoped and uncoated cathode active material LiNi_{0.6}Co_{0.1}Mn_{0.3}O₂ was obtained after jaw crusher crushing, roll crushing and airflow crushing.

### Comparative Example 2

The preparation method of Comparative Example 2 was similar to that of Example 2, except that: the cathode active material was not subjected to fluorine element doping, but subjected to the staged sintering in the present application to carry out coating of the double layers of the aluminum-rich inner layer and the titanium-rich outer layer. The specific implementation was as follows:
(1) 2.0kg of ternary precursor sol was mixed with 0.958kg of lithium carbonate, ball milling was performed for 2h, and then, sintering was performed, wherein a molar ratio of a lithium element in the lithium carbonate to transition metal elements in the ternary precursor was Li/(Ni+Co+Mn)=1.053, the sintering temperature was controlled to be 960°C, the sintering duration was 12h, the sintering atmosphere was air, and a ternary cathode material bulk was obtained after sintering; and
(2) 2.0kg of ternary cathode material bulk was mixed with 12.5g of 30nm Ti₃AlC₂, ball milling was performed for 2h, and then, staged sintering was performed, wherein for the low-temperature-stage sintering, the temperature was 400°C, the sintering duration was 4h, and the heating rate was 1.5°C/min; and for the high-temperature-stage sintering, the temperature was 650°C, the sintering duration was 8h, the heating rate was 4°C/min, the sintering atmosphere was air, and the cathode active material coated with the aluminum-rich inner layer and the titanium-rich outer layer was obtained after sintering.

### Comparative Example 3

The preparation method of Comparative Example 3 was similar to that of Example 1, except that: for the cathode active material, only the wet doping of the fluorine element in the present application was performed, but coating was not performed; that is, step (3) in Example 1 was omitted. The specific implementation was as follows:
(1) 2.5kg of 4.0µm ternary precursor Ni_{0.6}Co_{0.1}Mn_{0.3}(OH)₂ and 50g of hexadecyl trimethyl ammonium chloride were added into 6L of 0.005mol/L ammonium fluoride aqueous solution, ball milling was performed for 2h to form a sol with a certain solid content, and after uniformly mixing, the solid content was controlled to be 40% to obtain the fluorine-containing ternary precursor sol;
(2) 2.0kg of fluorine-containing ternary precursor sol was mixed with 0.958kg of lithium carbonate, ball milling was performed for 2h, and then, sintering was performed, wherein a molar ratio of a lithium element in the lithium carbonate to transition metal elements in the ternary precursor was Li/(Ni+Co+Mn)=1.053, the sintering temperature was controlled to be 960°C, the sintering duration was 12h, the sintering atmosphere was air, and a fluorine-doped ternary cathode material was obtained after sintering.

### Comparative Example 4

The preparation method of Comparative Example 4 was similar to that of Example 1, except that: the cathode active material was first subjected to fluorine element doping by using a traditional dry method, and then coated with an inorganic metal oxide.
(1) 2.5kg of 4.0µm ternary precursor Ni_{0.6}Co_{0.1}Mn_{0.3}(OH)₂, 0.958kg of lithium carbonate and 2.2g of ammonium fluoride were mixed, and then dry ball milling was performed for 2h, wherein a molar ratio of a lithium element in the lithium carbonate to transition metal elements in the ternary precursor was Li/(Ni+Co+Mn)=1.053, the sintering temperature was controlled to be 960°C, the sintering duration was 12h, the sintering atmosphere was air, and the fluorine-doped ternary cathode material bulk was obtained after sintering; and
(3) 2.0kg of fluorine-doped ternary cathode material bulk was mixed with 12.5g of nano aluminum oxide and 10g of nano titanium oxide, ball milling was performed for 2h, and staged sintering was then performed, wherein the sintering temperature was 600°C, the sintering duration was 8h, the heating rate was 10°C/min, the sintering atmosphere was air, and a fluorine-doped aluminum-titanium-coated cathode active material was obtained after sintering.

### Comparative Example 5

The preparation method of Comparative Example 5 was similar to that of Example 1, except that: only primary sintering was performed in the step (3), wherein the sintering temperature was 650°C, the sintering duration was 10h, and the heating rate was 10°C/min.

The cathode active materials prepared in Examples 1 to 4 and Comparative Examples 1 to 5 or further prepared lithium ions were subjected to related performance tests, and test results were shown in Tables 1 to 3 below.

In the above, test conditions or test standards of each performance test were as follows.
(1) XRD test of cathode active material
   200 cycles were performed on the cathode active materials in Examples 1 to 2 and Comparative Example 1 cycled for 200 cycles at a voltage of 2.8V to 4.4V and a rate of 0.1C/0.1C, and then the cycled cathode active material powder was placed in a sample table of an XRD test instrument (Model: Bruker D8), and scanned at a scanning speed of 2°/min and a scanning angle ranged from 10° to 90°, to obtain XRD diffraction patterns shown in FIG. 1. The samples of Examples 1 to 2 and Comparative Example 1 were subjected to an XRD refinement to obtain refinement data in Table 1 below, where the XRD refinement referred to a refinement of XRD data using a Rietveld method.
(2) SEM and EDS tests of cathode active material
   The cathode active material was tested by a ZEISS sigma 300 scanning electron microscope, and sample morphology was observed by referring to the standard JY/T010-1996, so as to obtain a morphology view and an EDS energy spectrogram shown in the FIG. 2.
(3) Metal dissolving-out amount test for lithium ion battery
   For the cathode materials obtained in Examples 1 to 4 and Comparative Examples 1 to 5, comparison of metal dissolving-out amounts of three elements of Ni, Co and Mn after storage at 80°C for 30 days and 60 days in a full-charge state of the battery was examined. A test method was as follows: assembling the prepared ternary cathode material into a button cell, disassembling the button cell after storing at 80°C respectively for 30 days and 60 days when the button cell was fully charged (4.4V), cleaning the cathode plate by using DMC, scraping an active substance layer of the cathode plate, then heating the active substance layer in aqua regia for 15min to 30min to dissolve the same, and carrying out an ICP test on the solution to test contents of Ni, Co and Mn to obtain the data in Table 1. The metal dissolving-out amounts of the three elements of Ni, Co and Mn were measured, and test results were shown in Table 2 below.
(4) High temperature cycle performance test for lithium ion battery

The lithium ion battery was charged to 4.4V at a constant current of 1C at 45°C, was then charged at the constant voltage until a current was 0.1C, stood for 5min, and was then discharged to 2.8V at a constant current of 1C, which processes referred to a charge-discharge cycle, wherein a discharge capacity at this point was tested and recorded as D01; the lithium ion battery was cycled for 200 cycles according to the above charging and discharging processes, the discharge capacity at the 200th cycle was tested and recorded as D1, and the test data was recorded in Table 3 below.

**Table 1**

| Group | Θ (003) | FWHN (104) | I_{003/104} | c/Å | a/Å | c/a | V/Å³ |
|---|---|---|---|---|---|---|---|
| Example 1 | 18.613 | 0.172 | 1.472 | 14.268 | 2.876 | 4.961 | 102.35 |
| Example 2 | 18.615 | 0.171 | 1.470 | 14.270 | 2.877 | 4.960 | 102.39 |
| Comparative Example 1 | 18.638 | 0.154 | 1.401 | 14.240 | 2.873 | 4.955 | 102.20 |

As seen from FIG. 1, compared with Comparative Example 1, the samples in Examples 1 to 2 had no impurity peak after cycling, which indicated that the crystal structure of the cathode active material was not changed after the fluorine element doping and coating of the aluminum-rich layer and the titanium-rich layer, and meanwhile, the structure of the material had better stability and no structural variation.

Furthermore, as seen from the XRD refinement results in Table 1 above, the I_{003/104} strength ratios of the samples of Examples 1 to 2 after cycling were greater than that of Comparative Example 1, because the bond energy of the M-F bond of the cathode active material formed after F doping was higher than that of the original M-O bond (M was Ni, Co or Mn), and the M-F chemical bond with the stronger bond energy could enhance the stability of the crystal structure, and reduce the Li⁺/Ni²⁺ hybrid arrangement degree, such that the layered structure of the material was more ordered and complete, thereby improving the structural stability of the cathode active material. In addition, values of unit cell parameters c, a, c/a and unit cell volume were all increased, because F atoms had a smaller radius than O atoms, the volume of the tetrahedral space of the lattice could be increased after F doping, such that the interlayer spacing could be increased to a certain extent, the diffusion channel of the active ions (such as the lithium ions) was widened, the deintercalation rate of the active ions in the lattices was increased, and thus, the structural stability of the cathode active material was further improved. More importantly, F doping enhanced structural stability of the unit cell, and inhibited the structural distortion in the cycle process, which was directly reflected by the fact that half-peak widths of (104) crystal faces of Examples 1 to 2 were obviously higher than that of Comparative Example 1; the surface aluminum-rich and titanium-rich coating layers synergistically cooperated to form the compact Li-Al-Ti-O solid solution structure, such that an "apparent volume" or "apparent size" of the material was reduced, and the stability of the electrode/electrolytic solution interface was further enhanced, which was directly reflected by the fact that peak orientations of (003) crystal faces of Examples 1 to 2 were smaller than that of Comparative Example 1.

**Table 2**

| Group | Ni dissolving-out amount (ppm) | Co dissolving-out amount (ppm) | Mn dissolving-out amount (ppm) |
|---|---|---|---|
| Example 1 | 1085 | 548 | 571 |
| Example 2 | 965 | 561 | 588 |
| Example 3 | 1033 | 608 | 612 |
| Example 4 | 1023 | 615 | 621 |
| Comparative Example 1 | 17434 | 9302 | 9540 |
| Comparative Example 2 | 2322 | 1012 | 989 |
| Comparative Example 3 | 13255 | 7012 | 6802 |
| Comparative Example 4 | 6433 | 2879 | 3021 |
| Comparative Example 5 | 18422 | 10009 | 9867 |

As seen from Table 2, after the ternary cathode materials obtained in Examples 1 to 4 by using the preparation method according to the present application were stored at the high temperature for a long time, the dissolving-out amounts of the metal elements were significantly lower than those in Comparative Examples 1 to 5, which indicated that the crystal structure could be better stabilized by F doping, a first efficiency of the material was improved, and meanwhile, the fluorine-doped and AI-Ti-coated ternary cathode material obtained by the preparation method according to the present application could form an effective and stable interface in the lithium ion battery, the reaction at the electrode/electrolytic solution interface could be remarkably reduced, and the formation of the hydrofluoric acid was reduced, thereby reducing the dissolution of the transition metal Ni/Co/Mn elements caused by the corrosion of the surface of the ternary cathode material by the hydrofluoric acid, and facilitating the improvement of the high-temperature storage performance of the lithium ion battery.

As seen from the left figure in FIG. 2, the cathode active material prepared according to the present application had good dispersibility, single crystal morphology was mellow and full, and a uniform coating layer could be seen on the surface of the material. As could be seen from the right figure in FIG. 2, Al, Ti and F elements could be detected on the surface of the material, and the coating layer included a solid solution formed by oxide of Al and Ti.

**Table 3**

| Group | 0.1C charge capacity (mAh/g) | Efficiency (%) | 0.1C discharge capacity (mAh/g) | 25°C, 50-cycle capacity retention rate (%) | 45°C, 50-cycle capacity retention rate (%) |
|---|---|---|---|---|---|
| Example 1 | 215.9 | 88.80 | 191.7 | 97.19 | 95.51 |
| Example 2 | 215.7 | 88.82 | 191.6 | 97.67 | 95.30 |
| Example 3 | 216.0 | 88.77 | 191.7 | 97.55 | 95.29 |
| Example 4 | 216.2 | 88.65 | 191.5 | 97.41 | 95.33 |
| Comparative Example 1 | 212.9 | 88.29 | 188.0 | 90.02 | 88.35 |
| Comparative Example 2 | 214.5 | 88.55 | 189.9 | 96.02 | 93.34 |
| Comparative Example 3 | 213.3 | 88.56 | 188.9 | 94.30 | 91.90 |
| Comparative Example 4 | 213.7 | 88.50 | 189.1 | 94.56 | 92.01 |
| Comparative Example 5 | 2115 | 88.30 | 186.7 | 89.67 | 88.45 |

As seen from Table 3, Examples 1 to 4 and Comparative Examples 1 to 5 had different electrochemical performances, and the ternary cathode material prepared using the method according to the present application had a better charge and discharge capacities, first efficiency and cycle performance, which indicated that by comparing Examples 1 and 2 and Comparative example 4, the ternary cathode material obtained by the preparation method according to the present application had a higher charge and discharge capacity, first efficiency and cycle performance than those of a blank sample or a product obtained by only the fluorine doping process or the aluminum-rich and titanium-rich coating process.

The technical features of the above embodiments may be combined at will, all possible combinations of the technical features of the embodiments described above may not be described for the sake of brevity, but should be considered to be within the scope of the present application as long as there is no contradiction between the combinations of the technical features.

The above-mentioned embodiments only express several implementations of the present application, and the description thereof is specific and detailed, but not to be construed as limiting the scope of the present application. It should be noted that various variations and improvements made by those skilled in the art without departing from the concept of the present application are all within the protection scope of the present application. Therefore, the protection scope of the present application shall be subject to the appended claims.

## Claims

1. A cathode active material, comprising:
a fluorine-doped ternary cathode material bulk; and
a coating structure coating at least part of a surface of the fluorine-doped ternary cathode material bulk, wherein the coating structure comprises an aluminum-rich inner coating layer close to the surface of the fluorine-doped ternary cathode material bulk and a titanium-rich outer coating layer away from the surface of the fluorine-doped ternary cathode material bulk.

2. The cathode active material according to claim 1, wherein the cathode active material satisfies at least one of following conditions (1) to (2):
(1) the fluorine-doped ternary cathode material bulk comprises a transition region, wherein the transition region is distributed on a shallow surface layer of the fluorine-doped ternary cathode material bulk close to the coating structure, and the transition region contains AlF₃; and
(2) the coating structure further comprises a transition layer, wherein the transition layer is located between the aluminum-rich inner coating layer and the titanium-rich outer coating layer, and a Li-AI-O-Ti solid solution structure is distributed in the transition layer.

3. The cathode active material according to claim 1, wherein the cathode active material satisfies at least one of following conditions (1) to (4):
(1) particles of the cathode active material have an average particle size of 3µm to 15µm;
(2) particles of the fluorine-doped ternary cathode material bulk have an average particle size of 3µm to 15µm;
(3) the aluminum-rich inner coating layer has a thickness of 5nm to 100nm; and
(4) the titanium-rich outer coating layer has a thickness of 5nm to 100nm.

4. The cathode active material according to any one of claims 1 to 3, wherein the cathode active material satisfies at least one of following conditions (1) to (3):
(1) a molecular formula of the fluorine-doped ternary cathode material bulk is represented by Li_{w}NiₓCo_{y}Mn_{1-x-y}O_{2-z}F_{z}, wherein 0.95≤w≤1.05, 0.33≤x<0.95, 0.05<y≤0.77, 0<z<1, and when w=1, the molecular formula of the fluorine-doped ternary cathode material bulk is represented by LiNiₓCo_{y}Mn_{1-x-y}O_{2-z}F_{z};
(2) based on a total mass of the cathode active material, a mass percent content of an aluminum element in the aluminum-rich inner coating layer is 0.002% to 20%; and
(3) based on the total mass of the cathode active material, a mass percent content of a titanium element in the titanium-rich outer coating layer is 0.002% to 20%.

5. A preparation method of a cathode active material, comprising:
providing a fluorine-containing ternary precursor sol;
mixing the fluorine-containing ternary precursor sol and a lithium salt, and performing a primary sintering to obtain a fluorine-doped ternary cathode material bulk; and
mixing the fluorine-doped ternary cathode material bulk and an MAX-type-compound-containing coating agent, and then carrying out secondary sintering to form a coating structure coating at least part of a surface of the fluorine-doped ternary cathode material bulk, wherein the coating structure comprises an aluminum-rich inner coating layer close to the surface of the fluorine-doped ternary cathode material bulk and a titanium-rich outer coating layer away from the surface of the fluorine-doped ternary cathode material bulk.

6. The preparation method according to claim 5, wherein the mixing the fluorine-containing ternary precursor sol and the lithium salt and performing the primary sintering comprises:
uniformly mixing the fluorine-containing ternary precursor sol and the lithium salt, and then carrying out ball milling to obtain a pre-doped material; and
carrying out primary sintering on the pre-doped material for 10h to 30h, preferably 15h to 25h, at 300°C to 1,000°C, preferably 350°C to 950°C.

7. The preparation method according to claim 5 or 6, wherein the preparation method satisfies at least one of following conditions (1) to (3):
(1) a molecular formula of the fluorine-doped ternary cathode material bulk is Li_{w}NiₓCo_{y}Mn_{1-x-y}O_{2-z}F_{z}, wherein 0.95≤w≤1.05, 0.33≤x<0.95, 0.05<y≤0.77, 0<z<1, and when w=1, the molecular formula of the fluorine-doped ternary cathode material bulk is LiNiₓCo_{y}Mn_{1-x-y}O_{2-z}F_{z};
(2) the lithium salt comprises one or more selected from the group consisting of lithium carbonate, lithium hydroxide, lithium nitrate and lithium acetate; and
(3) a molar ratio of a lithium element of the lithium salt to all transition metal elements of the fluorine-doped ternary cathode material bulk is (1.0-1.1):1.

8. The preparation method according to claim 5, wherein the mixing the fluorine-doped ternary cathode material bulk and the MAX-type-compound-containing coating agent and then carrying out secondary sintering comprises:
uniformly mixing the fluorine-doped ternary cathode material bulk and the MAX-type-compound-containing coating agent, and then carrying out ball milling to obtain a pre-coated material; and
carrying out staged sintering on the pre-coated material to form the coating structure coating at least part of the surface of the fluorine-doped ternary cathode material bulk, so as to obtain the cathode active material.

9. The preparation method according to claim 8, wherein the carrying out staged sintering on the pre-coated material comprises:
sintering the pre-coated material for 1h to 10h, preferably 2h to 8h, at 5°C to 400°C, preferably 50°C to 350°C to obtain a first sintered material; and
sintering the first sintered material for 5h to 30h, preferably 10h to 25h, at 400°C to 700°C, preferably 450°C to 650°C to obtain the cathode active material.

10. The preparation method according to claim 5 or 8, wherein the preparation method satisfies at least one of following conditions (1) to (3):
(1) a molecular formula of the MAX-type-compound-containing coating agent is TiₘAlCₙ, wherein 0<m<5, and 0<n<5;
(2) the MAX-type-compound-containing coating agent comprises MAX type compound nanoparticles, wherein an average particle size of the nanoparticles is 10nm to 2,000nm; and
(3) a mass ratio of the fluorine-doped ternary cathode material bulk to the MAX-type-compound-containing coating agent is 1:(0.0005-0.1).

11. The preparation method according to claim 5, wherein the providing fluorine-containing ternary precursor sol comprises:
making a ternary precursor and a dispersing agent contact and mixed with a fluoride-salt-containing aqueous solution to obtain a mixed solution; and
performing ball milling on the mixed solution to provide the fluorine-containing ternary precursor sol.

12. The preparation method according to claim 11, wherein the preparation method satisfies at least one of following conditions (1) to (3):
(1) a solid content of the fluorine-containing ternary precursor sol is 5% to 50%;
(2) a concentration of the fluoride-salt-containing aqueous solution is 0.05mol/L to 5mol/L; and
(3) a mass ratio of the ternary precursor, the dispersing agent and the fluoride salt is 1:(0.001-1.0):(0.001-0.1).

13. The preparation method according to claim 11 or 12, wherein the preparation method satisfies at least one of following conditions (1) to (4):
(1) a molecular formula of the ternary precursor is NiₐCo_{b}Mn_{1-a-b}(OH)₂, wherein 0.33≤a<0.95, and 0.05<b≤0.77;
(2) the ternary precursor comprises microparticles, wherein an average particle size of the microparticles is 4µm to 20µm;
(3) the dispersing agent comprises one or more selected from the group consisting of hexadecyl trimethyl ammonium chloride, dodecyl trimethyl ammonium chloride, cetylpyridinium chloride and sodium benzenesulfonate; and
(4) the fluoride salt comprises one or more selected from the group consisting of ammonium fluoride, sodium fluoride, magnesium fluoride and aluminum fluoride, and preferably ammonium fluoride.

14. A cathode plate, comprising the cathode active material according to any one of claims 1 to 4 or a cathode active material prepared by the preparation method according to any one of claims 5 to 13.

15. A secondary battery, comprising the cathode plate according to claim 14.

16. An electric apparatus, comprising the secondary battery according to claim 15.
